(19) Europäisches Patentamt
European Patent Office
Office européen des brevets

(11) EP 3 504 256 B1

(12) EUROPÄISCHE PATENTSCHRIFT

(45) Veröffentlichungstag und Bekanntmachung des Hinweises auf die Patenterteilung:
**08.07.2020 Patentblatt 2020/28**

(21) Anmeldenummer: **17754181.0**

(22) Anmeldetag: **23.08.2017**

(51) Int Cl.:
*C08G 2/22* (2006.01) *C08G 18/56* (2006.01)
*C08G 18/75* (2006.01) *C08G 18/76* (2006.01)
*C08K 5/00* (2006.01) *C08G 2/08* (2006.01)
*C08G 4/00* (2006.01) *C08G 101/00* (2006.01)

(86) Internationale Anmeldenummer:
**PCT/EP2017/071219**

(87) Internationale Veröffentlichungsnummer:
**WO 2018/037040 (01.03.2018 Gazette 2018/09)**

# (54) VERFAHREN ZUR HERSTELLUNG VON POLYURETHANPOLYMEREN MIT VERRINGERTEM BRENNWERT

METHOD FOR PRODUCING POLYURETHANE POLYMERS WITH REDUCED CALORIC VALUE

PROCEDE DE FABRICATION DE POLYMERES DE POLYURETHANE AYANT UNE VALEUR DE COMBUSTION REDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2016 EP 16185744**

(43) Veröffentlichungstag der Anmeldung:
**03.07.2019 Patentblatt 2019/27**

(73) Patentinhaber: **Covestro Deutschland AG**
**51373 Leverkusen (DE)**

(72) Erfinder:
- **GÜRTLER, Christoph**
  **50735 Köln (DE)**
- **MARKER, Volker**
  **51399 Burscheid (DE)**
- **MÜLLER, Thomas, Ernst**
  **52074 Aachen (DE)**
- **LEVEN, Matthias**
  **51069 Köln (DE)**
- **BIZZARRI, Claudia**
  **75137 Karlsruhe (DE)**
- **LEITNER, Walter**
  **52074 Aachen (DE)**

(74) Vertreter: **Levpat**
**c/o Covestro AG**
**Gebäude 4825**
**51365 Leverkusen (DE)**

(56) Entgegenhaltungen:
**EP-A1- 2 505 609** **WO-A1-2014/095679**
**US-A- 3 440 259** **US-A- 3 670 050**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung eines Polyurethanpolymers, umfassend den Schritt der Reaktion einer Polyolkomponente mit einer Polyisocyanatkomponente, wobei die Polyolkomponente ein Oxymethylenpolyol umfasst, wobei das Mengenverhältnis der Polyolkomponente zur der Polyisocyanatkomponente so gewählt ist, dass das durch die Reaktion erhaltene Polyurethanpolymer einen bestimmten Gehalt an aus dem Oxymethylenpolyol stammenden Oxymethylengruppen aufweist.

Zum gegenwärtigen Zeitpunkt werden weltweit über 11 Millionen Tonnen Polyurethan pro Jahr produziert. Unter dem Aspekt einer nachhaltigeren Produktionsweise ist der Einsatz von zumindest teilweise aus nachwachsenden Rohstoffquellen stammenden Polyolen als Polyurethan-Rohstoffe erstrebenswert. Als $C_1$-Baustein kommt insbesondere Formaldehyd in Frage. Formaldehyd ist nicht an die Verfügbarkeit von Erdöl gebunden und ist in großen Mengen gut zugänglich. Ein wichtiges Einsatzfeld für Formaldehyd ist die Herstellung von polymeren Materialien auf Basis von Oxymethylen (OM).

WO 2014/095679 A1 beschreibt ein Verfahren zur Herstellung von NCO-modifizierten Oxymethylen-Copolymeren, umfassend den Schritt der Polymerisation von Formaldehyd in Gegenwart eines Katalysators, wobei die Polymerisation von Formaldehyd weiterhin in Gegenwart einer Starterverbindung mit mindestens 2 Zerewitinoff-aktiven H-Atomen erfolgt, wobei ein Zwischenprodukt erhalten wird und das erhaltene Zwischenprodukt mit einem Isocyanat umgesetzt wird, wobei ein NCO-modifiziertes Oxymethylen-Copolymer erhalten wird. Es werden Polyisocyanate als mögliche Reagenzien zur NCO-Modifizierung genannt. Die Beispiele dieser Patentanmeldung offenbaren jedoch lediglich Tolylisocyanat, ein Monoisocyanat. Die Herstellung von Polyurethanen ist nicht belegt; der Einfluss auf die Eigenschaften von Polyurethanen wird ebenfalls nicht beschrieben EP 2 505 609 A1 und US 3,670,050 beschreiben beispielhaft Polyurethane auf Basis von Polyoxymethylenpolyolen, wobei der Gehalt an Oxymethylen-Gruppen mehr als 50 Gew.-% beträgt.

US 3,440,259 beschreibt flammgeschützte Polyurethane auf Basis von Polyolen, die von halogenierten Aldehyden abgeleitete Einheiten enthalten.

EP 0 004 618 A1 betrifft ein Verfahren zur Herstellung von schwerentflammbaren Polyurethan-Weichschaumstoffen durch Umsetzung von aromatischen Polyisocyanaten, Polyolen, Flammschutzmitteln und Treibmitteln sowie gegebenenfalls Kettenverlängerungsmitteln und Zusatzstoffen, dadurch gekennzeichnet, dass als aromatische Polyisocyanate eine Mischung aus Diphenylmethan-diisocyanaten und Polyphenyl-polymethylen-polyisocyanaten mit einem Gehalt an Diphenylmethan-diisocyanaten von 40 bis 90 Gew.%, bezogen auf das Gesamtgewicht, als Flammschutzmittel Cyansäurederivate und als Treibmittel Wasser verwendet wird. Als flammhemmendes Cyansäurederivat wird u.a. Melamin offenbart.

Herkömmliche Polyurethane besitzen verhältnismäßig hohe Brennwerte und stellen damit erhebliche Brandlasten dar. Nach dem Stand der Technik werden zum Brandschutz Additive verwendet, die die Entflammbarkeit hemmen. Diese Zusätze sind in ihrem einsetzbaren Umfang und in der Wirksamkeit begrenzt. Viele der hierzu verwendeten Stoffe bringen zudem toxische Eigenschaften mit sich, die den zulässigen Einsatzbereich beschränken können.

Die vorliegende Erfindung hat sich die Aufgabe gestellt, ein Polyurethanpolymer bereitzustellen, bei dem der Brennwert durch den grundsätzlichen Aufbau der Polymerstruktur reduziert ist. Vorteilhafterweise sollte die Herstellung des Polyurethanpolymers einen nicht auf Erdöl basierenden $C_1$-Baustein beinhalten. Formaldehyd ist ein solcher $C_1$-Baustein, der im Rahmen der vorliegenden Erfindung als Baustein für die Herstellung von Polyurethan-Materialien mit niedrigem Brennwert verfügbar gemacht werden sollte.

Erfindungsgemäß gelöst wird diese Aufgabe durch ein Verfahren zur Herstellung eines Polyurethanpolymers, umfassend den Schritt der Reaktion einer Polyolkomponente mit einer Polyisocyanatkomponente, wobei die Polyolkomponente ein Oxymethylenpolyol umfasst, wobei das Mengenverhältnis der Polyolkomponente zur der Polyisocyanatkomponente so gewählt ist, dass das durch die Reaktion erhaltene Polyurethanpolymer einen Gehalt an aus dem Oxymethylenpolyol stammenden Oxymethylengruppen von $\geq$ 11 Gewichts-% bis $\leq$ 50 Gewichts- %, bevorzugt von $\geq$ 11 Gewichts-% bis $\leq$ 45 Gewichts-% aufweist und der Gehalt an aus dem Oxymethylenpolyol stammenden Oxymethylengruppen mittels Protonenresonanzspektroskopie bestimmt wurde.

Die gemäß der vorliegenden Erfindung hergestellten Polyurethane weisen einen geringeren Brennwert als vergleichbare Polyurethane auf, deren Polyolkomponente keine Oxymethylengruppen enthält. Es können Formteile oder Schäume hergestellt werden, die Anwendung im Brandschutz von Gebäuden oder in anderen sensiblen Bereichen wie der Personenbeförderung finden. Die Verringerung des Brennwerts kann hierbei ohne den Zusatz von Additiven erreicht werden, die Einfluss auf die Materialeigenschaften nehmen. Der Brennwert ist hierbei insbesondere als Brennwert nach DIN 51900, ausgedrückt in kJ/kg, zu verstehen.

Im Sinne der vorliegenden Erfindung sind unter Oxymethylenpolyolen sowohl Oxymethylenpolyole mit einer Oxymethyleneinheit als auch Polyoxymethylenpolyole mit mindestens zwei direkt aufeinander folgenden Oxymethyleneinheiten zu verstehen.

Die Zusammensetzung der Polyolkomponente ist so gewählt, dass das Polyurethan einen Gehalt an aus dem

Oxymethylenpolyol stammenden Oxymethylengruppen von ≥ 11 Gewichts-% aufweist. Bevorzugt ist ein Gehalt von von ≥ 11 Gewichts-% bis ≤ 50 Gewichts-%, besonders bevorzugt von ≥ 11 Gewichts-% bis ≤ 45 Gewichts-% ganz besonders bevorzugt ≥ 20 Gewichts-% bis ≤ 45 Gewichts-%.

Die Polyolkomponente kann weitere Polyole beinhalten. Der Gehalt des Oxymethylenpolyols in der Polyolkomponente und der Gehalt an Oxymethylengruppen in dem Oxymethylenpolyol werden dann so gewählt, dass der erfindungsgemäß geforderte Gesamtgehalt an Oxymethylengruppen im Polyurethan eingehalten wird.

Oxymethylenpolyole im Sinne der Erfindung bezeichnen oligomere Verbindungen, die Oxymethylengruppen enthalten und mindestens 1,8, bevorzugt 1,9 und mehr bevorzugt zwei Hydroxylgruppen aufweisen.

Ein Oxymethylengruppe im Sinne der Erfindung umfasst mindestens eine und vorzugsweise 2 bis 20 oder vorzugsweise höchstens 150 Oxymethylen-Einheiten.

Die Polyisocyanatkomponente kann insbesondere ein aliphatisches oder aromatisches Di- oder Polyisocyanat umfassen. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit $C_1$ bis $C_6$-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Ausführungsformen und weitere Aspekte der vorliegenden Erfindung werden nachfolgend geschildert. Sie können beliebig miteinander kombiniert werden, sofern sich aus dem Kontext nicht eindeutig das Gegenteil ergibt.

In einer Ausführungsform des Verfahrens umfasst die Polyolkomponente ein Oxymethylenpolyol A),und/oder B), welche erhältlich sind durch:

im Fall des Oxymethylenpolyols A)
Umsetzung von Formaldehyd mit einer Starterverbindung mit mindestens 2 Zerewitinoff-aktiven H-Atomen und Comonomeren in Gegenwart eines Katalysators;

im Fall des Oxymethylenpolyols B)
Umsetzung einer oligomeren Formaldehyd-Vorstufe mit einer Starterverbindung mit mindestens 2 Zerewitinoff-aktiven H-Atomen in Gegenwart eines Katalysators.

Im Fall des Oxymethylenpolyols A) ist das Co-Monomer vorzugsweise ein Alkylenoxid, besonders bevorzugt Ethylenoxid, Propylenoxid und/oder Styroloxid.

Hinsichtlich des Formaldehyds in der Herstellung von Oxymethylenpolyol A) lässt sich anmerken, dass Formaldehyd in gasförmigem Zustand, ggf. als Mischung mit Inertgasen wie z.B. Stickstoff oder Argon oder als Mischung mit gasförmigem, überkritischem oder flüssigem Kohlendioxid, oder als Formaldehyd-Lösung eingesetzt werden kann. Bei Formaldehyd-Lösungen kann es sich um wässrige Formaldehyd-Lösungen mit einem Formaldehyd-Gehalt zwischen 1 Gew.-% und 37 Gew.% handeln, die gegebenenfalls bis zu 15 Gew.% Methanol als Stabilisator enthalten können. Alternativ können Lösungen von Formaldehyd in polaren organischen Lösungsmitteln wie z.B. Methanol oder höheren ein- oder mehrwertigen Alkoholen, 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander, mit Wasser und/oder anderen Lösungsmitteln eingesetzt werden. Die Anwesenheit weiterer Substanzen in Lösung ist ebenfalls mit eingeschlossen. Bevorzugt ist der Einsatz von Gemischen von gasförmigem Formaldehyd mit Argon oder Kohlendioxid. Ebenfalls bevorzugt ist der Einsatz von Lösungen von Formaldehyd in aprotischen polaren organischen Lösungsmitteln wie z.B. 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander, und/oder anderen Lösungsmitteln.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, Polyoxymethylen, Dimethylacetal, 1,3-Dioxolan, 1,3-Dioxan und/oder 1,3-Dioxepan, besonders bevorzugt sind 1,3,5-Trioxan und Paraformaldehyd.

Hinsichtlich der oligomeren Formaldehyd-Vorstufe in der Herstellung von Oxymethylenpolyol B) lässt sich anmerken, dass als Formaldehyd-Quelle Substanzen zum Einsatz kommen können, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Dimethylacetal, 1,3-Dioxolan, 1,3-Dioxan und/oder 1,3-Dioxepan.

Für das erfindungsgemäße Verfahren geeignete polymere Formaldehyd-Starterverbindungen weisen im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol auf und umfassen von 2 bis 1000, bevorzugt von 2 bis 400, besonders bevorzugt von 8 bis 200 und ganz besonders bevorzugt von 8 bis 100 Oxymethylen-Wiederholungseinheiten. Die im erfindungsgemäßen Verfahren eingesetzten Starterverbindungen haben typischerweise eine Funktionalität (F) von 1 bis 3, in bestimmten Fällen können diese aber auch höherfunktionell sein, also eine Funktionalität > 3 besitzen. Bevorzugt werden im erfindungsgemäßen Verfahren offenkettige polymere Formaldehyd-Starterverbindungen mit terminalen Hydroxylgruppen eingesetzt, welche eine Funktionalität von 1 bis 10, bevorzugt von 1 bis 5, besonders bevorzugt von 1,8 bis 3 haben. Ganz besonders bevorzugt werden im erfindungsgemäßen Verfahren lineare polymere Formaldehyd-Starterverbindungen eingesetzt, welche eine Funktionalität von 1,8 aufweisen (z.B. GRANUFORM® der Fa. Ineos). Die Funktionalität F entspricht der Anzahl an OH-Endgruppen pro Molekül.

Hinsichtlich der Starterverbindung in der Herstellung von Oxymethylenpolyol A) und Oxymethylenpolyol B) lässt sich anmerken, dass es sich hierbei vorzugsweise um bi- oder höherfunktionelle Verbindungen mit einem zahlenmittleren Molekulargewicht $M_n$ von beispielsweise zwischen 100 und 3 000 g/mol handelt. Die Funktionalität wird über terminale oder entlang der Polymerkette angeordnete, Heteroatome enthaltende, deprotonierbare funktionelle Gruppen wie beispielsweise Hydroxygruppen, Thiolgruppen, Aminogruppen, Carbonsäuregruppen oder Carbonsäurederivate wie z.B. Amide hergestellt. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert. Die Starterverbindungen haben typischerweise eine Funktionalität $\geq 2$, beispielsweise in einem Bereich von $\geq 2$ bis $\leq 6$, vorzugsweise von $\geq 2$ bis $\leq 4$ und besonders bevorzugt von $\geq 2$ bis $\leq 3$.

In einer bevorzugten Ausführungsform des erfindungsgemäßen Verfahrens wird die mindestens eine Starterverbindung ausgewählt aus der Gruppe bestehend aus Polyetherpolyolen, Polyesterpolyolen, Polyetheresterpolyolen, Polyethercarbonatpolyolen, Polycarbonatpolyolen und Polyacrylatpolyolen.

Die Polyole können beispielsweise ein zahlenmittleres Molekulargewicht $M_n$ von $\geq 62$ g/mol bis $\leq 8000$ g/mol, bevorzugt von $\geq 90$ g/mol bis $\leq 5000$ g/mol und besonders bevorzugt von $\geq 92$ g/mol bis $\leq 2000$ g/mol aufweisen.

Die durchschnittliche OH-Funktionalität der Polyole ist $\geq 1{,}8$, bevorzugt $\geq 1{,}9$ und mehr bevorzugt $\geq 2$ beispielsweise in einem Bereich von $\geq 2$ bis $\leq 6$, vorzugsweise von $\geq 2{,}0$ bis $\leq 4$ und besonders bevorzugt von $\geq 2{,}0$ bis $\leq 3$.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle.

Geeignete Startermoleküle für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie beispielsweise Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit $\geq$ 4 bis $\leq$ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit $\geq$ 1 bis $\leq$ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie beispielsweise mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle für diese Polyetherpolyole sind zum Beispiel Diole mit zahlenmittleren Molekulargewichten $M_n$ von vorzugsweise $\geq$ 18 g/mol bis $\leq$ 400 g/mol oder von $\geq$ 62 g/mol bis $\leq$ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis $\leq$ 8, oder von $\geq$ 3 bis $\leq$ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise $\geq$ 62 g/mol bis $\leq$ 400 g/mol oder von $\geq$ 92 g/mol bis $\leq$ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Für die Herstellung der Oxymethylenpolyole A) und/oderB grundsätzlich geeignete Katalysatoren sind ausgewählt aus der Gruppe der basischen Katalysatoren und/oder der Lewis-sauren Katalysatoren. Als Katalysator werden

Verbindungen eingesetzt, die die Polymerisation von Formaldehyd katalysieren. Hierbei kann es sich um basische Katalysatoren handeln oder um Lewis-saure Katalysatoren, die als Lewis-saures Zentrum z.B. ein Metall der dritten, vierten oder fünften Hauptgruppe, insbesondere Bor, Aluminium, Zinn oder Bismut, ein Metall der dritten oder vierten Nebengruppe oder der Reihe der Lanthanoide, Vanadium, Molybdän, Wolfram oder ein Metall der achten bis zehnten Nebengruppe enthalten. Bevorzugt sind Lewis-saure Katalysatoren.

In einer weiteren Ausführungsform des erfindungsgemäßen Verfahrens weist das Oxymethylenpolyol ein zahlenmittleres Molekulargewicht von < 6000 g/mol bevorzugt von < 4500 g/mol auf, wobei das zahlenmittlere Molekulargewicht mittels Gel-Permeations-Chromatographie (GPC) bestimmt wurde.

In einer weiteren Ausführungsform des erfindungsgemäßen Verfahrens beträgt die durchschnittliche Hydroxyl-Funktionalität der Polyolkomponente ≥ 1,8, bevorzugt ≥ 1,9 und mehr bevorzugt ≥ 2.0. Die so erhaltenen Polyurethane haben aufgrund ihrer Raumnetzstruktur duroplastische Eigenschaften. Es ist bevorzugt, dass die durchschnittliche Hydroxyl-Funktionalität der Polyolkomponente ≥ 2.2 bis ≤ 3.5, mehr bevorzugt ≥ 2.3 bis ≤ 3.0, beträgt.

In einer weiteren Ausführungsform des erfindungsgemäßen Verfahrens umfasst die Polyisocyanatkomponente ein mindestens trifunktionelles Polyisocyanat (d.h. ein Polyisocynat, das mindestens drei NCO-Gruppen im Molekül enthält). Die so erhaltenen Polyurethane haben aufgrund ihrer Raumnetzstruktur duroplastische Eigenschaften. Als mindestens trifunktionelles Polyisocyanat kommt beispielsweise das trimere Isocyanurat von 1,6-Hexamethylendiisocyanat ("HDI-Trimer") in Betracht.

In einer weiteren Ausführungsform des erfindungsgemäßen Verfahrens wird die Reaktion bei einem NCO-Index von ≥ 90 bis ≤ 200 durchgeführt. Bevorzugt ist ein Index von ≥ 100 bis ≤ 180.

In einer weiteren Ausführungsform des erfindungsgemäßen Verfahrens umfasst die Polyolkomponente ein weiteres Polyol, wobei das mindestens eine weitere Polyol ausgewählt ist aus der Gruppe bestehend aus Polyetherpolyolen, Polyesterpolyolen, Polyetheresterpolyolen, Polyethercarbonatpolyolen, Polycarbonatpolyolen und Polyacrylatpolyolen. Die Polyole können beispielsweise ein zahlenmittleres Molekulargewicht $M_n$ von ≥ 62 g/mol bis ≤ 8000 g/mol, bevorzugt von ≥ 90 g/mol bis ≤ 5000 g/mol und besonders bevorzugt von ≥ 92 g/mol bis ≤ 2000 g/mol aufweisen.

Die durchschnittliche OH-Funktionalität der Polyole ist ≥ 1,8, bevorzugt ≥ 1,9 und mehr bevorzugt ≥ 2, beispielsweise in einem Bereich von ≥ 2 bis ≤ 6, vorzugsweise von ≥ 2,0 bis ≤ 4 und besonders bevorzugt von ≥ 2,0 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle.

Geeignete Startermoleküle für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden. Sofern die mittlere Funktionalität des zu veresternden Polyols > 2 ist, können zusätzlich auch Monocarbonsäuren wie beispielsweise Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen erhältlich.

Beispiele derartiger Diole sind Ethylenglykol, 1,2- und 1,3-Propandiol, 1,3- und 1 ,4-Butandiol, 1,6-Hexandiol,

1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie beispielsweise mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle für diese Polyetherpolyole sind zum Beispiel Diole mit zahlenmittleren Molekulargewichten $M_n$ von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mit verwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

In der Herstellung des Oxymethylenpolyols werden die Oxymethylen-Einheiten entweder direkt oder indirekt über ein oder mehrere weitere Co-Monomere oder Spacer mit den zusätzlichen Oligomeren verknüpft. Auch eine Verknüpfung mehrerer Oxymethylen-Einheiten untereinander über ein oder mehrere weitere Co-Monomere ist möglich. In einer weiteren Ausführungsform des erfindungsgemäßen Verfahrens erfolgt daher in der Herstellung des Oxymethylenpolyols die Polymerisation in Gegenwart eines weiteren Co-Monomers. Als weitere Co-Monomere können beispielsweise zyklische Ether, insbesondere Epoxide wie z.B. Ethylenoxid, Propylenoxid oder Styroloxid, Oxetan, THF, Dioxan, zyklische Acetale wie z.B. 1,3-Dioxolan oder 1,3-Dioxepan, zyklische Ester wie z.B. γ-Butyrolacton, γ-Valerolacton, ε-Caprolacton, oder zyklische Säureanhydride wie z.B. Maleinsäureanhydrid, Glutarsäureanhydrid oder Phthalsäureanhydrid zum Einsatz kommen. Bevorzugte weitere Co-Monomere sind Epoxide, zyklische Acetale und zyklische Ester, besonders bevorzugte weitere Co-Monomere sind Ethylenoxid, Propylenoxid, 1,3-Dioxolan, 1,3-Dioxepan und ε -Caprolacton.

Die Dosierung weiterer Co-Monomere kann in Reinsubstanz oder in Lösung erfolgen. In einer alternativen Ausführungsform erfolgt die Dosierung weiterer Co-Monomere im Gemisch mit Formaldehyd bzw. der Formaldehyd-Quelle. Die Dosierung weiterer Co-Monomere kann vor der Dosierung, parallel zu der Dosierung oder im Anschluss an die Dosierung von Formaldehyd bzw. der Formaldehyd-Quelle erfolgen.

In einer weiteren Ausführungsform des erfindungsgemäßen Verfahrens wird die Reaktion in Abwesenheit eines Flammschutzmittels durchgeführt. Zu vermeidende Flammschutzmittel sind dem Fachmann im Prinzip bekannt und beispielsweise in "Kunststoffhandbuch", Band 7 "Polyurethane", Kapitel 6.1 beschrieben. Dies können beispielsweise

brom- und chlorhaltige Polyole oder Phosphorverbindungen wie die Ester der Orthophosphorsäure und der Metaphosphorsäure, die ebenfalls Halogen enthalten, sein. Insbesondere ausgeschlossen ist gemäß dieser Ausführungsform Tris(2-chlorisopropyl)phosphat (TCPP), Tris(1,3-dichlor-isopropyl)phosphat (TDCPP) und Tris(2-chlorethyl)phosphat (TCEP).

Ein weiterer Gegenstand der vorliegenden Erfindung ist ein Polyurethanpolymer, welches durch ein erfindungsgemäßes Verfahren erhältlich ist.

In einer Ausführungsform des erfindungsgemäßen Polyurethanpolymers beträgt der Gehalt an Oxymethylengruppen ≥ 11 Gewichts-%. Bevorzugt ist ein Gehalt von ≥ 11 Gewichts-% bis ≤ 50 Gewichts-%, besonders bevorzugt von ≥ 11 Gewichts-% bis ≤ 45 Gewichts-% ganz besonders bevorzugt ≥ 20 Gewichts-% bis ≤ 45 Gewichts-%.Der Gehalt an Oxymethylengruppen im Polyurethan lässt sich am einfachsten aus der Massenbilanz an Formaldehyd bei der Herstellung des Oxymethylenpolyols, welches zur Herstellung des Polyurethans verwendet wurde, ermitteln.

In einer weiteren Ausführungsform des erfindungsgemäßen Polyurethanpolymers weist dieses einen Brennwert nach DIN 51900 von ≤ 26000 kJ/kg auf. Bevorzugt ist ein Brennwert von ≤ 25000 kJ/kg, mehr bevorzugt ≤ 24500 kJ/kg.

In einer weiteren Ausführungsform des erfindungsgemäßen Polyurethanpolymers enthält dieses kein Flammschutzmittel. Zu vermeidende Flammschutzmittel sind dem Fachmann im Prinzip bekannt und beispielsweise in "Kunststoffhandbuch", Band 7 "Polyurethane", Kapitel 6.1 beschrieben. Dies können beispielsweise brom- und chlorhaltige Polyole oder Phosphorverbindungen wie die Ester der Orthophosphorsäure und der Metaphosphorsaure, die ebenfalls Halogen enthalten, sein. Insbesondere ausgeschlossen sind gemäß dieser Ausführungsform Tris(2-chlorisopropyl)phosphat (TCPP), Tris(1,3-dichlorisopropyl)phosphat (TDCPP) und Tris(2-chlorethyl)phosphat (TCEP).

Die vorliegende Erfindung betrifft weiterhin die Verwendung eines erfindungsgemäßen Polyurethanpolymers als Isolationsmaterial.

Die vorliegende Erfindung wird durch die nachfolgenden Beispiele näher beschrieben.

## Beispiele

*Eingesetzte Polyole*

Polyol-1 Formaldehyd-haltiges Diol erhalten aus Trioxan mit einer Massenanteiligen Zusammensetzung von 43 % Propylenoxid, 41 % Formaldehyd, und 16 % Ethylenoxid. Das zahlenmittlere Molekulargewicht $M_n$ betrug 5147 g/mol.

Polyol-2 Formaldehyd-haltiges Diol erhalten aus Trioxan mit einer Massenanteiligen Zusammensetzung von 39 % Propylenoxid, 42 % Formaldehyd, und 19 % Ethylenoxid. Das zahlenmittlere Molekulargewicht $M_n$ betrug 7794 g/mol.

Polyol-3 Polypropylenglykol mit einem Brennwert nach DIN 51900 von 30440 KJ/Kg. Das zahlenmittlere Molekulargewicht $M_n$ betrug 8000 g/mol.

Polyol-4 Formaldehyd-haltiges Polyol mit einer Massenanteiligen Zusammensetzung von 89 % Propylenoxid und 11 % Formaldehyd. Das zahlenmittlere Molekulargewicht $M_n$ betrug 1801 g/mol.

Polyol-5 Arcol 1110 Covestro AG 700 g/mol, Funktionalität 3
PFA: Granuform ®, Ineos, 94,5-96,5 % POM Anteil

*Eingesetzte Polyisocyanate*

Toluol-2,4-diisocyanat: Sigma Aldrich ≥98 %
Toluol-2,6-diisocyanat: Sigma Aldrich 97 %
Desmodur W: H12-MDI, Covestro AG

*Eingesetzte Additive:*

Melamin: Sigma-Aldrich 99 %

*Beschreibung der Methoden*

Gel-Permeations-Chromatographie (GPC): Die Messungen erfolgten auf einem Agilent 1200 Series (G1310A Iso Pump, G1329A ALS, G1316A TCC, G1362A RID, G1365D MWD), Detektion über RID; Elutionsmittel: Chloroform

(GPC grade), Flussrate 1.0 ml/min; Säulenkombination: PSS SDV Vorsäule 8×50 mm (5 μm), 2× PSS SDV linear S 8×300 ml (5 μm). Polypropylenglykolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC Chromatogramme erfolgte in Anlehnung an DIN 55672-1.
$^{1}$H-NMR-Spektroskopie: Die Messungen erfolgten auf einem Bruker AV400 (400 MHz); die Kalibrierung der chemischen Verschiebungen erfolgte relativ zu Trimethylsilan als internem Standard ($\delta$ = 0.00 ppm) oder zum Lösungsmittelsignal ($CDCl_3$, $\delta$ = 7.26 ppm); s = Singulett, m = Multiplett, bs = verbreitertes Singulett, kb = komplexer Bereich. Die Angabe der Größe der Flächenintegrale der Signale erfolgt relativ zueinander.

Bei der Copolymerisation resultierte das Oxymethylenepolyetherpolyol, welches einerseits in der nachfolgenden Formel gezeigte Oxymethylene-Einheiten enthält,

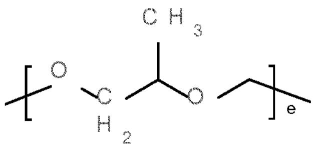
bzw.
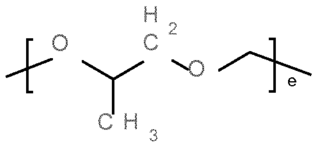

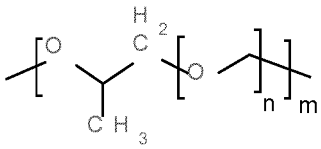
bzw.
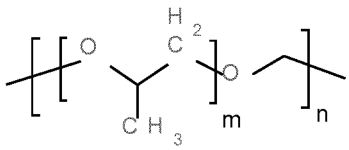

und andererseits in der nachfolgenden Formel gezeigte Polyether-Einheiten enthält.

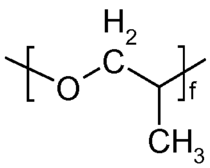
bzw.
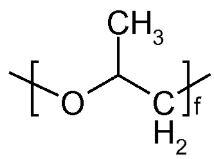

Das molare Verhältnis von Oxymethylengruppen (aus Formaldehyd) zu Ethergruppen im Oxymethylenepolyetherpolyol sowie der Anteil des umgesetzten Formaldehyds (C in mol%) wurden mittels 1H-NMR Spektroskopie bestimmt.

Wenn die Copolymerisation von Formaldehyd und Propylenoxid in Gegenwart eines DMC Katalysator durchgeführt wurde, enthält das Polyol weiterhin die nachfolgend gezeigten Polycarbonat-Einheiten (PEC).

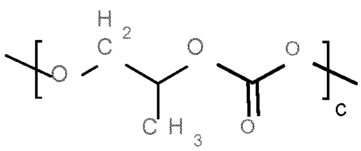
bzw.
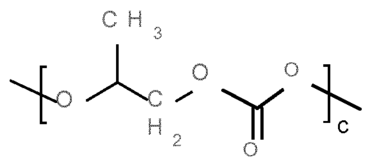

Die Probe wurde jeweils in deuteriertem Chloroform gelöst und auf einem Spektrometer der Firma Bruker (AV400, 400 MHz) vermessen.

Die relevanten Resonanzen im $^{1}$H-NMR Spektrum (bezogen auf TMS = 0 ppm), die zur Integration verwendet wurden, sind wie folgt:

I1: 1,11 - 1,17: Methylgruppe der Polyether-Einheiten, Fläche der Resonanz entspricht drei H Atomen

12: 1,25 - 1,32: Methylgruppe der Polycarbonat-Einheiten, Fläche der Resonanz entspricht drei H Atomen (Wenn PEC Einheiten anwesend sind).

13: 3,093-4,143: CH- und $CH_2$- Gruppe der Polyether-Einheiten, Fläche der Resonanz entspricht drei H Atomen

14: 4,40-5,20: Methylgruppe der Oxymethylen-Einheiten, Fläche der Resonanz entspricht zwei H Atomen

Angegeben sind das molare Verhältnis Oxymethylengruppen zu Ethergruppen im Oxymethylen polyether polyol sowie der Anteil des umgesetzten Propylenoxids (C in mol%).

Unter Berücksichtigung der relativen Intensitäten, errechnet sich der relative Anteil $n_i$ der einzelnen Struktureinheiten i mit den Integralen $I_i$ nach:

| | |
|---|---|
| (PO): | n1 = I1/3 |
| (PEC): | n2 = I2/3 |
| ($CH_2O$): | n4 = I4/2 |

Molares Verhältnis von Oxymethylengruppen zu Ethergruppen im Polymer:

$$(CH_2O)/(PO) = I4 / I1$$

Der molare Anteil des umgesetzten Formaldehyds (C in mol%) bezogen auf die Summe der bei der Aktivierung und der Copolymerisation eingesetzten Menge an Propylenoxid, berechnet sich nach der Formel:

$$C = [\ (I4/2)/\ ((I1/3)+(I2/3)+(I3/3)+(I4/2))]\ *\ 100\%$$

Die Signale für $CH_2O$ und PEC-CH (wenn PEC anwesend ist) überlappen teilweise. Deshalb werden alle Flächenintegrale dieser Signale aufsummiert und um den PEC-CH Anteil korrigiert.

Bei Abwesenheit von unterschiedlichen Endgruppen kann für F-funktionelle (wobei F für bihydroxyfunktionelle Polyole 2 ist, und für trifunktionelle Polyole 3 ist) Oxymethylenpolyethercopolymere die durchschnittliche Summenformel mit Hilfe des per OH-Zahl ermittelten durchschnittlichen Molekulargewichtes M.W. errechnet werden nach:

$$MW = (F \times 1000 \times MW_{KOH}) / (OH\text{-}Zahl)$$

$$f = MW/\ \Sigma((I_i/\#H_i)*MW_i)$$

wobei $I_i$ ist die Summe der Integralen der Einheit "i" und $\#H_i$ ist die Zahl der Protonen in Einheit "i".

Multiplikation des erhaltenen Faktors f mit den relativen Anteilen $n_i$ (i = PE, PEC, $CH_2O$) ergibt die durchschnittliche Anzahl $x_i$ der Einheiten i in der durchschnittlichen Summenformel

$$\#PO: ((I1/3) \times f) - (\#PO)_{starter}$$

$$\#(CH_2O) : (I4/2) \times f$$

$^{13}C$-NMR-Spektroskopie: Die Messungen erfolgten auf einem Bruker AV400 (100 MHz); die Kalibrierung der chemischen Verschiebungen erfolgte relativ zum Lösungsmittelsignal ($CDCl_3$, $\delta$ = 77,16 ppm); APT (attached proton test): $CH_2$, $C_{quart}$: positives Signal (+); CH, $CH_3$: negatives Signal (-); HMBC: Hetero multiple bond correlation; HSQC: Heteronuclear single-quantum correlation.

Thermische Daten wurden mittels DSC (differential scanning calorimetry) ermittelt.

Zur Bestimmung der Entzündungszeit wurden 0,5 g der zu testenden Substanz auf einen Metallspatel mit einer Materialstärke von 0,5 mm platziert. Die Materialprobe wurde mit einem Gasbrenner konstanter Leistung erhitzt. Dazu wurde ein einheitlicher Abstand der Brennerdüse von 5,0 cm zur Probe eingehalten. Die Dauer der Exposition bis zum Entzünden der Probe wurde mit Hilfe einer Stoppuhr gemessen und aus Zweifachbestimmungen gemittelt.

Im Folgenden wird die Durchführung der erwähnten Polymerisation anhand ausgewählter Beispiele beschrieben.

Beispiel 1 Herstellung eines Polyurethans mit einem Oxymethylenpolyol

Unter Schutzgas (Argon) wurden 21 g (4,080 mmol, 1 Äq.) von Polyol-1 in 120 ml absolutem 1,2-Dichlorobenzol gelöst. Als Katalysator wurden 26 mg (0,041 mmol, 0,01 Äq.) Dibutylzinndilaurat (DBTL) zugesetzt und der Ansatz auf 80 °C erhitzt. Unter *in situ*-Beobachtung mittels Infrarot-Spektroskopie wurde Toluol-2,4-diisocyanat in kleinen Portionen zugegeben, bis kein sichtbarer Umsatz von Diisocyanat mehr erfolgte (1,054 g, 0,605 mmol, 1,48 Äq.) über 4h. Die Reaktionsmischung wurde unter Rühren für weitere 10 h bei einer Temperatur von 80 °C gerührt und anschließend das gebildete Polymer durch Fällung mit n-Pentan abgeschieden.
Ausbeute: 15,7 g; 71 %.

Die in der Charakterisierung des Polyurethans ermittelten Daten sind in der nachfolgenden Tabelle zusammengefasst.

| | |
|---|---|
| Gehalt Oxymethylen-Einheiten | 41 Gew.% |
| Gehalt Polypropylenoxid-Einheiten | 43 Gew.% |
| Gehalt Polyethylenoxid-Einheiten | 12 Gew.% |
| Gehalt Toluol-2,4-diisocyanat-Einheiten | 3 Gew.% |
| Molekulargewicht $M_n$ | 26265 g/mol |
| Polydispersitätsindex | 2,2 |
| Thermische Zersetzung | 220 °C |
| Schmelzpunkt | 160 °C |
| Schmelzenthalpie | 3,4 J/g |
| Brennwert nach DIN 51900 | 23527 kJ/kg |
| Entzündungszeit | 6,6 s |

Beispiel 2 Herstellung eines Polyurethans mit einem Oxymethylenpolyol

Unter Schutzgas (Argon) wurden 14 g (1,796 mmol, 1 Äq.) Polyol-2 in 40 ml absolutem 1,2-Dichlorobenzol gelöst. Als Katalysator wurden 12 mg (0,018 mmol, 0,01 Äq.) Dibutylzinndilaurat (DBTL) zugesetzt und der Ansatz auf 80 °C erhitzt. Toluol-2,4-diisocyanat (0,460 g, 0,266 mmol, 1,48 Äq.) wurde in drei gleich großen Portionen über einen Zeitraum von 6 Stunden zugegeben. Die Reaktionsmischung wurde unter Rühren für weitere 10 h bei einer Temperatur von 80 °C gerührt und anschließend das gebildete Polymer durch Fällung mit n-Pentan abgeschieden.
Ausbeute: 11,4 g; 79 %.

Die in der Charakterisierung des Polyurethans ermittelten Daten sind in der nachfolgenden Tabelle zusammengefasst.

| | |
|---|---|
| Gehalt Oxymethylen-Einheiten | 41 Gew.% |
| Gehalt Polypropylenoxid-Einheiten | 37 Gew.% |
| Gehalt Polyethylenoxid-Einheiten | 18 Gew.% |
| Gehalt Toluol-2,4-diisocyanat-Einheiten | 3 Gew.% |
| Molekulargewicht $M_n$ | 12080 g/mol |
| Polydispersitätsindex | 2,9 |
| Thermische Zersetzung | 211 °C |
| Schmelzpunkt | 78 °C |
| Schmelzenthalpie | 17,1 J/g |
| Brennwert nach DIN 51900 | 23930 kJ/kg |
| Entzündungsdauer | 12,5 s |

Beispiel 3 Herstellung eines Polyurethans mit einem Oxymethylenpolyol

Unter Schutzgas (Argon) wurden 7 g (0,898 mmol, 1 Äq.) Polyol-2 in 30 ml absolutem 1,2-Dichlorobenzol gelöst. Als Katalysator wurden 6 mg (0,009 mmol, 0,01 Äq.) Dibutylzinndilaurat (DBTL) zugesetzt und der Ansatz auf 70 °C erhitzt. Desmodur W (0,589 g, 2,245 mmol, 2,50 Äq.) wurde in drei gleich großen Portionen über einen Zeitraum von 7 Stunden zugegeben. Anschließend wurden 10 mg 3-Methyl-1-phenyl-2phospholen-1-oxid (0,05 mmol, 0,05 Äq.) zugegeben und weitere 7 Stunden bei 90°C gerührt. Das gebildete Polymer wurde durch Fällung mit 100 ml n-Pentan abgeschieden.
Ausbeute: 5,9 g; 78 %.

Die in der Charakterisierung des Polyurethans ermittelten Daten sind in der nachfolgenden Tabelle zusammengefasst.

| | |
|---|---|
| Gehalt Oxymethylen-Einheiten | 39 Gew.% |
| Gehalt Polypropylenoxid-Einheiten | 37 Gew.% |
| Gehalt Polyethylenoxid-Einheiten | 18 Gew.% |
| Gehalt Desmodur W-Einheiten | 6 Gew.% |
| Molekulargewicht $M_n$ | 18785 g/mol |
| Polydispersitätsindex | 2,3 |
| Thermische Zersetzung | 190 °C |
| Schmelzpunkt | 90 °C |
| Brennwert nach DIN 51900 | 24140 kJ/kg |
| Entzündungsdauer | 8,3 s |

Beispiel 4 Herstellung eines Polyurethan-Schaums mit einem Oxymethylenpolyol

Zur Herstellung eines Weichschaums wurden 9,95 g (4,700 mmol, 0,0142 Äq.) des Polyol-4 (statistische Anordnung der Struktureinheiten) in einer Metalldose vorgelegt. Wasser, 0,33 g (18,000 mmol, 0,37 Äq.) und 0,06 g Zinn-(II)-Octanoat (0,148 mmol, 1,48 $10^{-4}$ Äq.) wurden zugegeben. Die Mischung wurde mit einer Geschwindigkeit von 1400 U/min verrührt und Toluol-2,6-diisocyanat, 6,91 g (39,700 mmol, 0,079 Äq.) eingetragen. Nach einer Reaktionszeit von 5 Minuten war das volle Volumen des Schaums erreicht.

Die in der Charakterisierung des Polyurethan-Schaums ermittelten Daten sind in der nachfolgenden Tabelle zusammengefasst.

| | |
|---|---|
| Gehalt Oxymethylen-Einheiten | 6 Gew.% |
| Gehalt Polypropylenoxid-Einheiten | 51 Gew.% |
| Gehalt Toluol-2,6-diisocyanat-Einheiten | 40 Gew.% |
| Brennwert nach DIN 51900 | 27030 kJ/ kg |
| Entzündungsdauer | 8,43 s |

Oxymethylen - Vergleichsbeispiel 5: Herstellung eines Polyurethans mit einem Polyol ohne Formaldehyd-Gehalt

Unter Schutzgas (Argon) wurden 3 g (0,375 mmol, 1 Äq.) des Polyols-3 in 10 ml absolutem 1,2-Dichlorobenzol gelöst. Als Katalysator wurden 3 mg (0,004 mmol, 0,01 Äq.) Dibutylzinndilaurat (DBTL) zugesetzt und der Ansatz auf 80 °C erhitzt. Toluol-2,4-diisocyanat (0,098 g, 0,563 mmol, 1,48 Äq.) wurde in drei gleich großen Portionen über einen Zeitraum von 6 Stunden zugegeben. Die Reaktionsmischung wurde unter Rühren für weitere 10 h bei einer Temperatur von 80 °C gerührt und anschließend das gebildete Polymer durch Einengen im Vakuum ($10^{-2}$ mbar) bei einer Temperatur von 110 °C vom Lösemittel befreit.
Ausbeute: 3,0 g; 97 %.

Die in der Charakterisierung des Polyurethans ermittelten Daten sind in der nachfolgenden Tabelle zusammengefasst.

| | |
|---|---|
| Gehalt Oxymethylen-Einheiten | 0 Gew.% |
| Gehalt Polypropylenoxid-Einheiten | 97 Gew.% |
| Gehalt Polyethylenoxid-Einheiten | 0 Gew.% |
| Gehalt Toluol-2,4-diisocyanat-Einheiten | 3 Gew.% |
| Molekulargewicht $M_n$ | 113100 g/mol |
| Polydispersitätsindex | 1,1 |
| Thermische Zersetzung | 320°C |
| Schmelzpunkt | - |
| Schmelzenthalpie | 0,0 J/g |
| Brennwert nach DIN 51900 | 28290 kJ/kg |
| Entzündungsdauer | 1,4 s |

Vergleichsbeispiel 6 Herstellung eines Polyurethans unter Zusatz von Melamin

Unter Schutzgas (Argon) wurden 1,722 g (0,215 mmol, 1 Äq.) von Polyol-3 in 10 ml absolutem 1,2-Dichlorobenzol gelöst. Als Katalysator wurde 1 mg (0,002 mmol, 0,01 Äq.) Dibutylzinndilaurat (DBTL) zugesetzt. Zu dieser Mischung wurden 0,675 g (5,336 mmol, 11 Äq.) Melamin in Form von Pulver gegeben und der Ansatz auf 80 °C erhitzt. Toluol-2,4-diisocyanat (1,447 g, 8,318 mmol, 17,98 Äq.) wurde in drei gleich großen Portionen über einen Zeitraum von 6 Stunden zugegeben. Die Reaktionsmischung wurde unter Rühren für weitere 10 h bei einer Temperatur von 80 °C gerührt.

Es wurde kein Polyurethan im Sinne der Patenschrift EP 0 004 618 A1 erhalten.

Vergleichsbeispiel 7 Herstellung eines Polyurethans unter Zusatz von Paraformaldehyd

Unter Schutzgas (Argon) wurden 20,000 g (2,500 mmol, 1 Äq.) des Polyol-3 in 15 ml absolutem 1,2-Dichlorobenzol gelöst. Als Katalysator wurde 16 mg (0,025 mmol, 0,01 Äq.) Dibutylzinndilaurat (DBTL) zugesetzt. Zu dieser Mischung wurden 5,800 g (14,500 mmol, 5,8 Äq.) Paraformaldehyd (Molekularmasse von 400 g/mol) in Form von Pulver gegeben und der Ansatz auf 80 °C erhitzt. Toluol-2,4-diisocyanat (2,530 g, 14,527 mmol, 5,8 Äq.) wurde in drei gleich großen Portionen über einen Zeitraum von 6 Stunden zugegeben. Die Reaktionsmischung wurde unter Rühren für weitere 10 h bei einer Temperatur von 80 °C gerührt und anschließend das gebildete Polymer durch Fällung mit n-Pentan abgeschieden.
Ausbeute: 28,1 g; 97 %.

Das auf diese Weise erhaltene Polyurethan wies eine geringe thermische Stabilität auf und entwickelte bereits bei 40 °C signifikante Mengen an Gas. Die austretenden Gase wurden mittels gekoppelter Massenspektroskopie als Formaldehyd identifiziert. Im Temperaturbereich von 40°C - 150°C wurde ein Gewichtsverlust des Polyurethans von 15 Gewichts-% gemessen.

Vergleichsbeispiel 8 Herstellung eines Polyurethan-Schaums mit einem Polyol

Zur Herstellung eines Weichschaums wurden 10,0 g (13,7 mmol, 0,0412 Äq.) des Polyol-5 (Arcol 1110) in einer Metalldose vorgelegt. Wasser, 0,57 g (3,2 mmol, 0,06 Äq.) und 0,05 g Zinn-(II)-Octanoat (0,124 mmol, 1,24 $10^{-4}$ Äq.) wurden zugegeben. Die Mischung wurde mit einer Geschwindigkeit von 1400 U/min verrührt und Toluol-2,6-diisocyanat, 14,6 g (83,9 mmol, 0,17 Äq.) eingetragen. Nach einer Reaktionszeit von 5 Minuten war das volle Volumen des Schaums erreicht.

Die in der Charakterisierung des Polyurethan-Schaums ermittelten Daten sind in der nachfolgenden Tabelle zusammengefasst.

| | |
|---|---|
| Gehalt Oxymethylen-Einheiten | 0 Gew.% |
| Gehalt Polypropylenoxid-Einheiten | 51 Gew.% |
| Gehalt Toluol-2,6-diisocyanat-Einheiten | 40 Gew.% |

(fortgesetzt)

| | |
|---|---|
| Brennwert nach DIN 51900 | 27920 kJ/ kg |
| Entzündungsdauer | 3,48 s |

*Vergleich*

Die nachfolgende Tabelle zeigt einen Vergleich der Ergebnisse für die erfindungsgemäßen Polyurethane aus Beispielen 1 bis 4 und die Vergleichsbeispiele 5 bis 7.

| Beispiel | Polyol/ Additiv | Gehalt Oxymethylen-Einheiten [Gew.%] | Zersetzungstemperatur [°C] | Brennwert [kJ/kg] | Enzündungsdauer [s] |
|---|---|---|---|---|---|
| 1 | Polyol-1/- | 41 | 220 | 23527 | 6,6 |
| 2 | Polyol-2/- | 41 | 211 | 23930 | 12,5 |
| 3 | Polyol-2/- | 39 | 190 | 24140 | 8,3 |
| 4 (Vgl.) | Polyol-4/ - | 6 | n.b. | 27030 | 8,7 |
| 5 (Vgl.) | Polyol-3/- | 0 | 320 | 28290 | 1,4 |
| 6 (Vgl.) | Polyol-3 /Melamin | 0 | Kein PU erhalten | | |
| 7 (Vgl.) | Polyol-4/PFA | 20 | <40 | Freisetzung von gasförmigem Formaldehyd | |
| 8 (Vgl.) | Polyol-5/- | 0 | n.b. | 27920 | 3,48 |
| PFA Paraformaldehyd; n.b. nicht bestimmt | | | | | |

Ein Vergleich von Beispielen 1 bis 4 mit dem Vergleichsbeispiel 5 belegt, dass der Brennwert der erfindungsgemäßen Polyurethane (Beispiele 1 bis 4) gegenüber herkömmlichen Polyurethanen (Vergleichsbeispiel 5) deutlich reduziert ist, während die Entzündungsdauer für die erfindungsgemäßen Polyurethane (Beispiele 1 bis 3, Entzündungsdauer ≥8,3 s) und PolyurethanSchäumen (Beispiel 4, Entzündungsdauer ≥3,2 s) gegenüber herkömmlichen Polyurethanen (Vergleichsbeispiel 5) deutlich verlängert ist. Dagegen wurde bei Zusatz von Melamin zur Herabsetzung des Brennwertes kein Polyurethan erhalten (Vergleichsbeispiel 6). Bei Verwendung einer Mischung aus einem Polyetherpolyol und Paraformaldehyd zersetzte sich das erhaltene Polyurethan bereits bei geringen Temperaturen von 40°C unter Freisetzung von gasförmigem Formaldehyd (Vergleichsbeispiel 7). Die erfindungsgemäßen Polyurethane weisen damit ein besonders vorteilhaftes Brandverhalten auf.

**Patentansprüche**

1. Verfahren zur Herstellung eines Polyurethanpolymers, umfassend den Schritt der Reaktion einer Polyolkomponente mit einer Polyisocyanatkomponente, wobei die Polyolkomponente ein Oxymethylenpolyol umfasst,
   **dadurch gekennzeichnet, dass**
   das Mengenverhältnis der Polyolkomponente zur der Polyisocyanatkomponente so gewählt ist, dass das durch die Reaktion erhaltene Polyurethanpolymer einen Gehalt an aus dem Oxymethylenpolyol stammenden Oxymethylengruppen von ≥ 11 Gewichts-% bis ≤ 50 Gewichts-%, bevorzugt von ≥ 11 Gewichts-% bis ≤ 45 Gewichts-% aufweist und der Gehalt an aus dem Oxymethylenpolyol stammenden Oxymethylengruppen mittels Protonenresonanzspektroskopie bestimmt wurde.

2. Verfahren gemäß Anspruch 1, wobei die Polyolkomponente ein Oxymethylenpolyol A) und/oder B) umfasst, welche erhältlich sind durch:

   im Fall des Oxymethylenpolyols A)
   Umsetzung von Formaldehyd mit einer Starterverbindung mit mindestens 2 Zerewitinoff-aktiven H-Atomen und Comonomeren in Gegenwart eines Katalysators;

im Fall des Oxymethylenpolyols B)
Umsetzung einer oligomeren Formaldehyd-Vorstufe mit einer Starterverbindung mit mindestens 2 Zerewitinoff-aktiven H-Atomen in Gegenwart eines Katalysators;

**3.** Verfahren gemäß Anspruch 1 oder 2, wobei das Oxymethylenpolyol ein zahlenmittleres Molekulargewicht von < 4500 g/mol aufweist, wobei das zahlenmittlere Molekulargewicht mittels Gel-Permeations-Chromatographie (GPC) bestimmt wurde.

**4.** Verfahren gemäß einem der Ansprüche 1 bis 3, wobei in der Herstellung des Oxymethylenpolyol mindestens die eine Starterverbindung ausgewählt wird aus der Gruppe der Polyetherpolyole, Polyesterpolyole, Polyetheresterpolyole, Polyethercarbonatpolyole, Polycarbonatpolyole und Polyacrylatpolyole.

**5.** Verfahren gemäß einem der Ansprüche 1 bis 4, wobei die durchschnittliche Hydroxyl-Funktionalität der Polyolkomponente ≥ 1,8, bevorzugt ≥ 1,9 und mehr bevorzugt ≥ 2.0beträgt.

**6.** Verfahren gemäß einem der Ansprüche 1 bis 5, wobei die Polyisocyanatkomponente ein mindestens trifunktionelles Polyisocyanat umfasst.

**7.** Verfahren gemäß einem der Ansprüche 1 bis 6, wobei die Reaktion bei einem NCO-Index von ≥ 90 bis ≤ 200 durchgeführt wird.

**8.** Verfahren gemäß einem der Ansprüche 1 bis 7, wobei die Polyolkomponente mindestens ein weiteres Polyol ausgewählt aus der Gruppe bestehend aus Polyetherpolyole, Polyesterpolyole, Polyetheresterpolyole, Polyethercarbonatpolyole, Polycarbonatpolyole und Polyacrylatpolyole umfasst.

**9.** Verfahren gemäß einem der Ansprüche 1 bis 8, wobei in der Herstellung des Oxymethylenpolyols die Polymerisation in Gegenwart eines weiteren Co-Monomers erfolgt.

**10.** Verfahren gemäß einem der Ansprüche 1 bis 9, wobei die Reaktion in Abwesenheit eines Flammschutzmittels durchgeführt wird.

**11.** Polyurethanpolymer, erhältlich durch ein Verfahren gemäß einem der Ansprüche 1 bis 10.

**12.** Polyurethanpolymer gemäß Anspruch 11 mit einem Gehalt an Oxymethylengruppen von ≥ 11 Gewichts-% bis ≤ 50 Gewichts-%, bevorzugt von ≥ 11 Gewichts-% bis ≤ 45 Gewichts- % aufweist und der Gehalt an aus dem Oxymethylenpolyol stammenden Oxymethylengruppen mittels Protonenresonanzspektroskopie bestimmt wurde.

**13.** Polyurethanpolymer gemäß Anspruch 11 oder 12 mit einem Brennwert nach DIN 51900 von ≤ 26000 kJ/kg.

**14.** Polyurethanpolymer gemäß einem der Ansprüche 11 bis 13, nicht enthaltend Flammschutzmittel.

**15.** Verwendung eines Polyurethanpolymers gemäß einem der Ansprüche 11 bis 14 als Isolationsmaterial.

## Claims

**1.** Process for preparing a polyurethane polymer, comprising the step of reacting a polyol component with a polyisocyanate component, where the polyol component comprises an oxymethylene polyol,
**characterized in that**
the quantitative ratio of the polyol component to the polyisocyanate component is chosen such that the polyurethane polymer obtained by the reaction has a content of oxymethylene groups originating from the oxymethylene polyol of ≥ 11% by weight to ≤ 50% by weight, preferably of ≥ 11% by weight to ≤ 45% by weight, and the content of oxymethylene groups originating from the oxymethylene polyol has been determined by means of proton resonance spectroscopy.

**2.** Process according to Claim 1, wherein the polyol component comprises an oxymethylene polyol A) and/or B) obtainable by:

in the case of the oxymethylene polyol A) reacting formaldehyde with a starter compound having at least 2 Zerewitinoff-active hydrogen atoms and comonomers in the presence of a catalyst;
in the case of the oxymethylene polyol B) reacting an oligomeric formaldehyde precursor with a starter compound having at least 2 Zerewitinoff-active hydrogen atoms in the presence of a catalyst.

**3.** Process according to Claim 1 or 2, wherein the oxymethylene polyol has a number-average molecular weight of < 4500 g/mol, wherein the number-average molecular weight has been determined by means of gel permeation chromatography (GPC).

**4.** Process according to any of Claims 1 to 3, wherein, in the preparation of the oxymethylene polyol, at least the one starter compound is selected from the group of the polyether polyols, polyester polyols, polyetherester polyols, polyethercarbonate polyols, polycarbonate polyols and polyacrylate polyols.

**5.** Process according to any of Claims 1 to 4, wherein the average hydroxyl functionality of the polyol component is ≥ 1.8, preferably ≥ 1.9 and more preferably ≥ 2.0.

**6.** Process according to any of Claims 1 to 5, wherein the polyisocyanate component comprises an at least trifunctional polyisocyanate.

**7.** Process according to any of Claims 1 to 6, wherein the reaction is conducted at an NCO index of ≥ 90 to ≤ 200.

**8.** Process according to any of Claims 1 to 7, wherein the polyol component comprises at least one further polyol selected from the group consisting of polyether polyols, polyester polyols, polyetherester polyols, polyethercarbonate polyols, polycarbonate polyols and polyacrylate polyols.

**9.** Process according to any of Claims 1 to 8, wherein, in the preparation of the oxymethylene polyol, the polymerization is effected in the presence of a further comonomer.

**10.** Process according to any of Claims 1 to 9, wherein the reaction is conducted in the absence of a flame retardant.

**11.** Polyurethane polymer obtainable by a process according to any of Claims 1 to 10.

**12.** Polyurethane polymer according to Claim 11, having a content of oxymethylene groups of ≥ 11% by weight to ≤ 50% by weight, preferably of ≥ 11% by weight to ≤ 45% by weight, and the content of oxymethylene groups originating from the oxymethylene polyol has been determined by means of proton resonance spectroscopy.

**13.** Polyurethane polymer according to Claim 11 or 12, having a calorific value to DIN 51900 of ≤ 26 000 kJ/kg.

**14.** Polyurethane polymer according to any of Claims 11 to 13, not comprising flame retardant.

**15.** Use of a polyurethane polymer according to any of Claims 11 to 14 as insulation material.

## Revendications

**1.** Procédé pour la préparation d'un polymère de polyuréthane, comprenant l'étape de réaction d'un composant polyol avec un composant polyisocyanate, le composant polyol comprenant un oxyméthylènepolyol, **caractérisé en ce que** le rapport de la quantité du composant polyol à celle du composant de polyisocyanate est choisi de manière telle que le polymère de polyuréthane obtenu par la réaction présente une teneur en groupes oxyméthylène provenant de l'oxyméthylènepolyol de ≥ 11% en poids à ≤ 50% en poids, de préférence de ≥ 11% en poids à ≤ 45% en poids et la teneur en groupes oxyméthylène provenant de l'oxyméthylènepolyol ayant été déterminée par spectroscopie par résonance de protons.

**2.** Procédé selon la revendication 1, le composant polyol comprenant un oxyméthylènepolyol A) et/ou B), qui peuvent être obtenus par :

- dans le cas de l'oxyméthylènepolyol A) transformation de formaldéhyde avec un composé initiateur présentant au moins 2 atomes de H actifs selon Zerewitinoff et des comonomères en présence d'un catalyseur

- dans le cas de l'oxyméthylènepolyol B) transformation d'un précurseur oligomère de formaldéhyde avec un composé initiateur présentant au moins 2 atomes de H actifs selon Zerewitinoff en présence d'un catalyseur.

**3.** Procédé selon la revendication 1 ou 2, l'oxyméthylènepolyol présentant un poids moléculaire moyen en nombre < 4500 g/mole, le poids moléculaire moyen en nombre ayant été déterminé par chromatographie par perméation de gel (CPG).

**4.** Procédé selon l'une quelconque des revendications 1 à 3, ledit au moins un composé initiateur, lors de la préparation de l'oxyméthylènepolyol, étant choisi dans le groupe des polyétherpolyols, des polyesterpolyols, des polyétheresterpolyols, des polyéthercarbonatepolyols, des polycarbonatepolyols et des polyacrylatepolyols.

**5.** Procédé selon l'une quelconque des revendications 1 à 4, la fonctionnalité hydroxyle moyenne du composant polyol étant ≥ 1,8, de préférence ≥ 1,9 et plus préférablement ≥ 2,0.

**6.** Procédé selon l'une quelconque des revendications 1 à 5, le composant polyisocyanate comprenant au moins un polyisocyanate trifonctionnel.

**7.** Procédé selon l'une quelconque des revendications 1 à 6, la réaction étant réalisée à un indice NCO de ≥ 90 à ≤ 200.

**8.** Procédé selon l'une quelconque des revendications 1 à 7, le composant polyol comprenant au moins un autre polyol choisi dans le groupe constitué par les polyétherpolyols, les polyesterpolyols, les polyétheresterpolyols, les polyéthercarbonatepolyols, les polycarbonatepolyols et les polyacrylatepolyols.

**9.** Procédé selon l'une quelconque des revendications 1 à 8, la polymérisation, lors de la préparation de l'oxyméthylènepolyol, ayant lieu en présence d'un autre comonomère.

**10.** Procédé selon l'une quelconque des revendications 1 à 9, la réaction étant réalisée en l'absence d'un agent ignifuge.

**11.** Polymère de polyuréthane, pouvant être obtenu par un procédé selon l'une quelconque des revendications 1 à 10.

**12.** Polymère de polyuréthane selon la revendication 11, présentant une teneur en groupes oxyméthylène de ≥ 11% en poids à ≤ 50% en poids, de préférence de ≥ 11% en poids à ≤ 45% en poids et la teneur en groupes oxyméthylène provenant de l'oxyméthylènepolyol ayant été déterminée par spectroscopie par résonance de protons.

**13.** Polymère de polyuréthane selon la revendication 11 ou 12, présentant un pouvoir calorifique selon la norme DIN 51900 ≤ 26.000 kJ/kg.

**14.** Polymère de polyuréthane selon l'une quelconque des revendications 11 à 13, ne contenant pas d'agent ignifuge.

**15.** Utilisation d'un polymère de polyuréthane selon l'une quelconque des revendications 11 à 14 comme matériau d'isolation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014095679 A1
- EP 2505609 A1
- US 3670050 A
- US 3440259 A
- EP 0004618 A1


### In der Beschreibung aufgeführte Nicht-Patentliteratur


- Polyurethane. Kunststoffhandbuch. vol. 7